# EUROPEAN PATENT APPLICATION

(11) **EP 1 139 638 A2**
(43) Date of publication of application: **04.10.2001**
(21) Application number: 01301814.8
(22) Date of filing: 28.02.2001
(51) Int. Cl.: H04M 1/02

(54) **Portable electronic apparatus**

(30) Priority: 30.03.2000 GB 0007805
(71) Applicant: NOKIA MOBILE PHONES LTD., 02150 Espoo (FI)
(72) Inventor: Newstead, Robert, Frimley, Surrey, GU16 5XT (GB); Barnett, Ricky, Radlett, Hertfordshire, WD7 8NQ (GB)
(74) Representative: Geary, Stuart Lloyd

(57) **Abstract**

The casing (1) of a portable electronic apparatus (2) includes a main front panel (3) which is formed from carbon fibre reinforced resin.

## Description

The present invention relates to a portable electronic apparatus comprising a casing.

Portable electronic apparatuses are an indispensable feature of modern life. Such devices serve to provide entertainment, e.g. portable radios and portable CD players, computing facilities and communications, e.g. mobile telephones, and indeed combinations of these functions.

No user wishes to be weighed down by their portable electronic apparatuses and there is a strong pressure to reduce the size of such apparatuses. However, this tends to result in the apparatuses becoming insufficiently rugged because of the thinning of the apparatus casings. This leads to an increased risk of damage as the smaller apparatuses are more likely to be placed in a back pocket and inadvertently sat on.

The present invention addresses the above-mentioned problem and provides a way of ruggedising apparatus of any size.

A portable electronic apparatus according to the present invention is characterised in that the casing includes a skin component formed from a carbon fibre and resin composite material. The composite material need not be exposed and may be hidden behind an outer decorative layer. However, the composite material itself has a pleasing appearance which is appropriate for a consumer product.

The present invention is particularly useful where the skin component has a plurality of closely spaced apertures, for instance for the keys of a keypad to project through, arranged over a substantial portion thereof. Such an apertured area will be inherently weaker than a similar unapertured area. Thus, an area weakened by apertures may be formed from a carbon fibre and resin composite material while another skin component that is not so weakened may be formed from a plastics resin material conventionally used for such components.

The present invention is applicable to mobile telephones, in which case the carbon fibre and resin composite is used for a front panel.

An embodiment of the present invention will now be described, by way of example, with reference to the accompanying drawings, in which: -
Figure 1 is a front view of a mobile telephone embodying the present invention;
Figure 2 is an exploded view of the casing of the mobile telephone of Figure 1;
Figure 3 is a block diagram of the circuitry of the mobile telephone of Figure 1; and
Figure 4 illustrates the moulding process used to produce the main front cover of the mobile telephone of Figure 1.

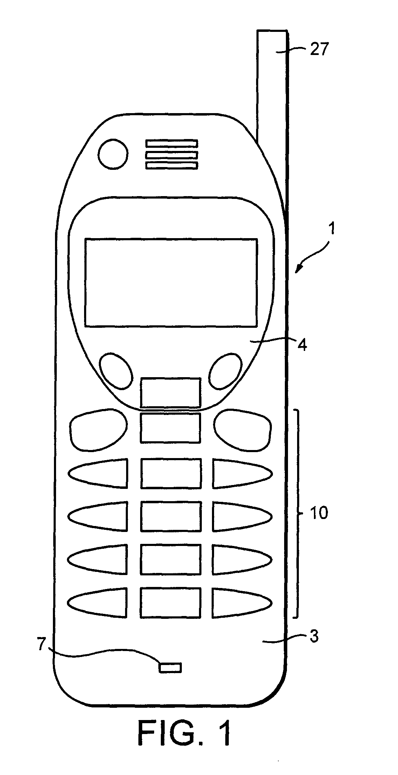

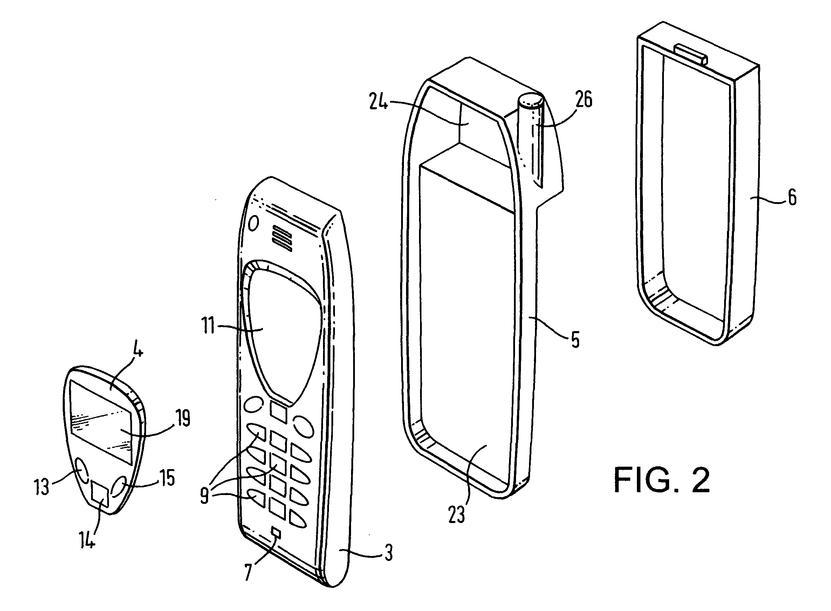

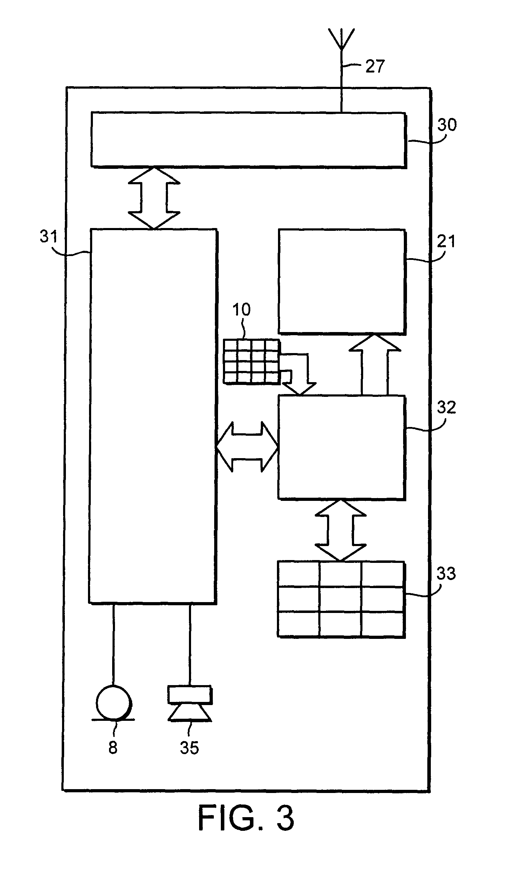

Referring to Figures 1 and 2, the casing of a mobile telephone 1 comprises four main skin components 3, 4, 5, 6. A main front panel 3 is generally elongate and convex when viewed from the front. A small aperture 7 for providing a sound path to a microphone 8 (Figure 3) is provided centrally at the bottom of the main front panel 3. Holes 9 for most of the keys of a keypad 10 are arranged above the small aperture 7. An inverted substantially triangular aperture 11 is located above the holes 9 and receives an escutcheon 4. The escutcheon 4 has three small holes 13, 14, 15 around its lower corner through which buttons of the keypad 10 protrude, and a window 19 through which the telephone's display 21 (Figure 3) can be viewed.

The main front panel 3 is formed from carbon fibre reinforced resin.

A main rear panel 5 has an rim that matches the rim of the main front panel 3. The rear panel 5 is concave when viewed from the front of the telephone but is divided into a shallow lower portion 23 and a deeper upper portion 24. The shallower lower portion 23 is the result of a step the back of the main rear panel 5 for receiving a battery mounted in a battery cover 6. The main rear panel 5 has a number of small apertures (not shown) for making connections to the battery, external devices, e.g. a battery charger, and a SIM card holder (not shown) located on the back of the main rear panel 5 where it is covered by the battery. A vertical tube 26 projects from the top right corner of the main back panel 22 for mounting an antenna 27.

In the present embodiment, the escutcheon 4, the main rear panel 5 and the battery cover 6 are moulded from plastics resin material. However, a stronger mobile telephone can be produced by forming these components from carbon fibre reinforced resin.

Referring to Figure 3, the circuitry of the mobile telephone 2 is conventional for a digital mobile telephone and comprises an rf subsystem 30 connected to the antenna 27. The rf subsystem 30 is also connected to a baseband subsystem 31. The rf and baseband subsystems 30, 31 are controlled by a controller 32 which also controls the display 21. The controller 32 can also read data from and write data to a SIM card via the contacts of a SIM card holder 33 and gets inputs from the keypad 10 The microphone 8 and a loudspeaker 35 are connected to the baseband subsystem for receiving and transmitting audio signals. The mobile telephone 1 also includes power supply circuitry (not shown) from powering the afore-mentioned elements.

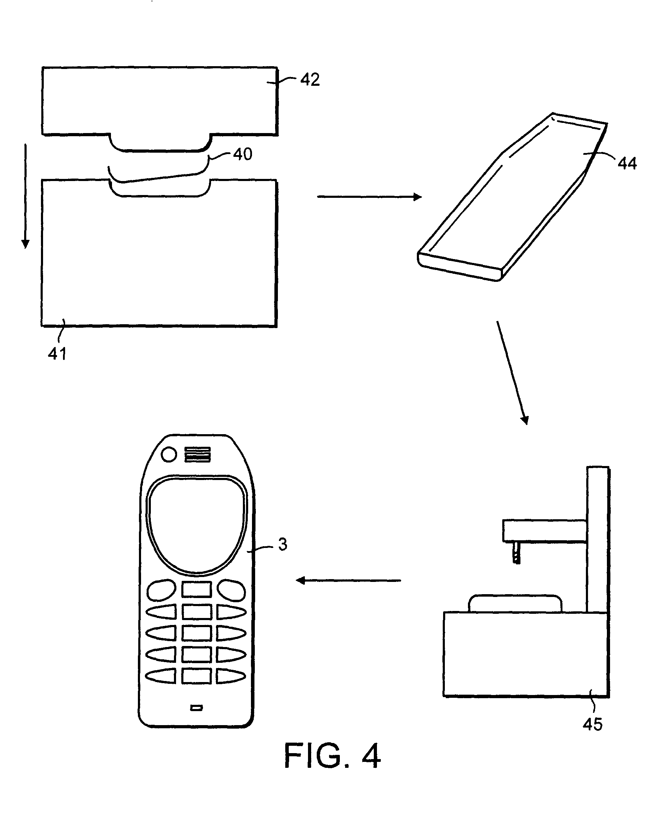

Referring to Figure 4, the main front panel 3 is formed by laying carbon fibre fabric 40, impregnated with resin, into a mould 41 which defines the outer face of the main front panel 3. A core 42, defining the back of the main front panel 3, is lowered into the mould 41. The mould 41 and the core 42 are then heated in an autoclave in the conventional manner.

After heating in the autoclave, holes are formed in the front panel blank 44 by a numerically controlled milling machine 45 to produce the finished main front panel 3.

It will be appreciated that the present invention may be embodied in ways that differ from the exemplary embodiment described above.

## Claims

1. A portable electronic apparatus comprising a casing (3, 5) **characterised in that** the casing (3, 5) includes a skin component (3) formed from a carbon fibre and resin composite material.

2. An apparatus according to claim 1, wherein said skin component (3) has a plurality of closely spaced apertures (9) arranged over a substantial portion thereof.

3. An apparatus according to claim 2, including a keypad (10) having a plurality of pressable members, wherein the pressable members project through said apertures (9).

4. An apparatus according to claim 2 or 3, including a further skin component (5) which does not have a plurality of closely spaced apertures arranged over a substantial portion thereof and is formed from unreinforced plastics resin material.

5. A mobile telephone according to claim 2, 3 or 4.

6. A mobile telephone according to claim 5, wherein the carbon fibre and resin composite skin component comprises a main front panel (3).
